# EUROPÄISCHE PATENTSCHRIFT

(11) **EP 1 977 099 B1**
(45) Veröffentlichungstag und Bekanntmachung des Hinweises auf die Patenterteilung: **06.11.2013**
(21) Anmeldenummer: 07701263.1
(22) Anmeldetag: 16.01.2007
(51) Int. Cl.: F02D 19/02, F02M 21/02

(54) **SYSTEM ZUR VERSORGUNG EINES VERBRAUCHERS MIT GASFÖRMIGEM BRENNSTOFF UND VERFAHREN**
SYSTEM FOR SUPPLYING A CONSUMER WITH GASEOUS FUEL AND ASSOCIATED METHOD
SYSTÈME D'ALIMENTATION D'UNE CHARGE EN CARBURANT GAZEUX ET PROCÉDÉ ASSOCIÉ

(30) Priorität: 16.01.2006 AT 2006 U
(43) Veröffentlichungstag der Anmeldung: 08.10.2008
(73) Patentinhaber: Magna Steyr Fahrzeugtechnik AG & Co. KG, 8041 Graz (AT)
(72) Erfinder: PUCHER, Peter, 8111 Judenburg (AT)
(74) Vertreter: Biernot, Peter
(86) Internationale Anmeldenummer: PCT/AT2007/000012
(87) Internationale Veröffentlichungsnummer: WO 2007/079517

(56) Entgegenhaltungen:
- DE-A1- 19 910 893
- JP-A- 57 210 154
- JP-A- 60 113 057
- US-A- 5 329 908

## Beschreibung

Die Erfindung betrifft ein System zur Versorgung eines Verbrauchers mit gasförmigem Brennstoff, mit mindestens einem Druckgasbehälter der über eine Sammelleitung und Ventile mit dem Verbraucher strömungsverbunden ist. Der Verbraucher ist in den meisten Fällen ein mit Gas betriebener Verbrennungsmotor eines Kraftfahrzeuges. Da das Gas mit einem Fülldruck von 200 Bar oder mehr gespeichert ist, und aus Gründen der Unterbringung im Kraftfahrzeug werden oft mehrere und Behälter geringeren Durchmessers eingesetzt, bisweilen Gasflaschen der marktgängigen Bauart.

Ein derartiges System mit zwei Druckgasbehältern ist beispielsweise in der EP 761 951 B1 und JP 6011 3057 beschrieben, wobei dort aber vor allem auf die Regelung des Druckes im Verbraucher eingegangen wird, die nicht Gegenstand der vorliegenden Erfindung ist. Wegen des Druckverlustes zwischen den Behältern und den Einspritzdüsen der Verbrennungskraftmaschine können die Druckgasbehälter nie ganz geleert werden. Ihr Speichervermögen wird also nur unvollständig genutzt. Die Druckgasbehälter müssen somit für eine Kapazität dimensioniert werden, die größer als die tatsächlich nutzbare Menge ist. Damit aber ist die Reichweite des Fahrzeuges mit einer Behälterfüllung beschränkt.

Es ist daher Aufgabe der Erfindung, die Kapazität der Druckgasbehälter weitgehend auszunutzen und nebstbei noch das Erreichen der nächsten Tankstelle zu erleichtern.

Erfindungsgemäß wird das dadurch erreicht, dass ein Reservebehälter über ein erstes Ventil an die Sammelleitung angeschlossen ist und dass eine mit Gas aus dem Reservebehälter betriebene Saugstrahlpumpe vorgesehen ist, welche Gas aus dem mindestens einen Druckgasbehälter in die Sammelleitung fördert, wozu die Saugstrahlpumpe hinsichtlich der Strömung zwischen dem mindestens einen Behälter und dem Verbraucher angeordnet ist. Der Reservebehälter ist nicht nur eine Reserve, um noch die nächste Tankstelle zu erreichen. Sein Inhalt wird zunächst verwendet, um aus den zu gutem Teil entleerten Druckgasbehältern noch eine erhebliche Restmenge herauszusaugen. Dadurch wird die Reserve sozusagen doppelt verwendet, als Brennstoff-Reserve und als Energie-Reserve. So wird in der Saugstrahlpumpe auch ihre Druckenergie genutzt, die bei der Entnahme aus den Druckgasbehältern "verdrosselt" wird. Damit stellt der Reservebehälter letztlich eine Gasmenge zur Verfügung, die rund das Doppelte ihrer Kapazität sein kann. Dazu kommt noch der Saugstrahlpumpen eigene Vorteil, keine beweglichen Teile zu haben und keine systemfremde Energiezufuhr zu benötigen.

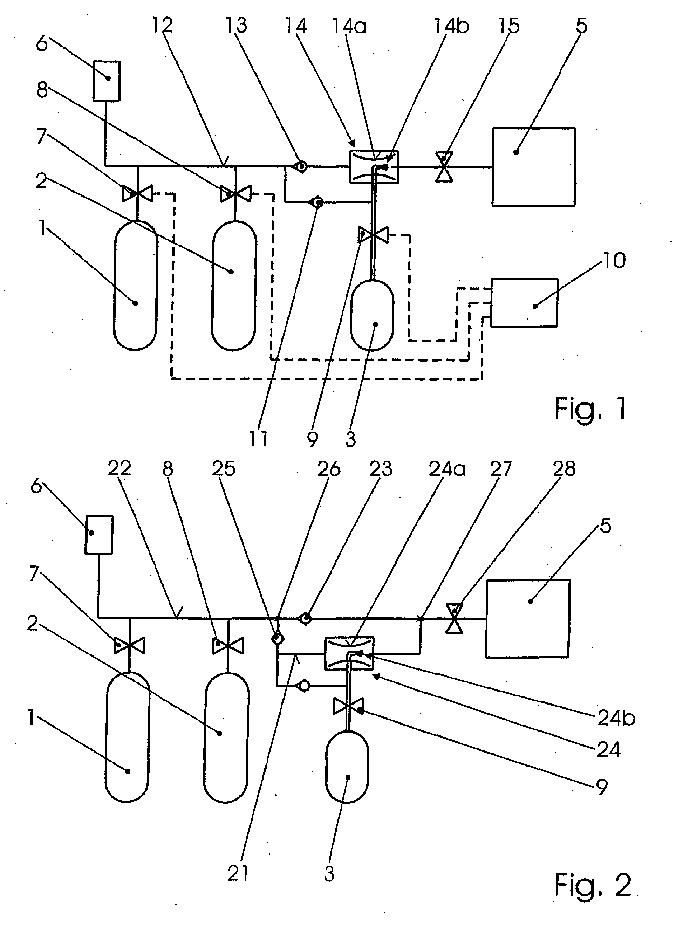

Vorzugweise ist in der Sammelleitung zwischen dem mindestens einem Druckgasbehälter und der Einmündung des vom Reservebehälter kommenden Gases ein Rückschlagventil angeordnet, das eine Strömung vom Reservebehälter zu dem mindestens einem Druckgasbehälter unterbindet (Anspruch 2). So kann auch dann keine Rückströmung aus dem Reservebehälter stattfinden, wenn aus irgendwelchen Gründen, zum Beispiel Verstopfung, die Strömung in der Saugstrahlpumpe abreisst. Fig. 1,2,3

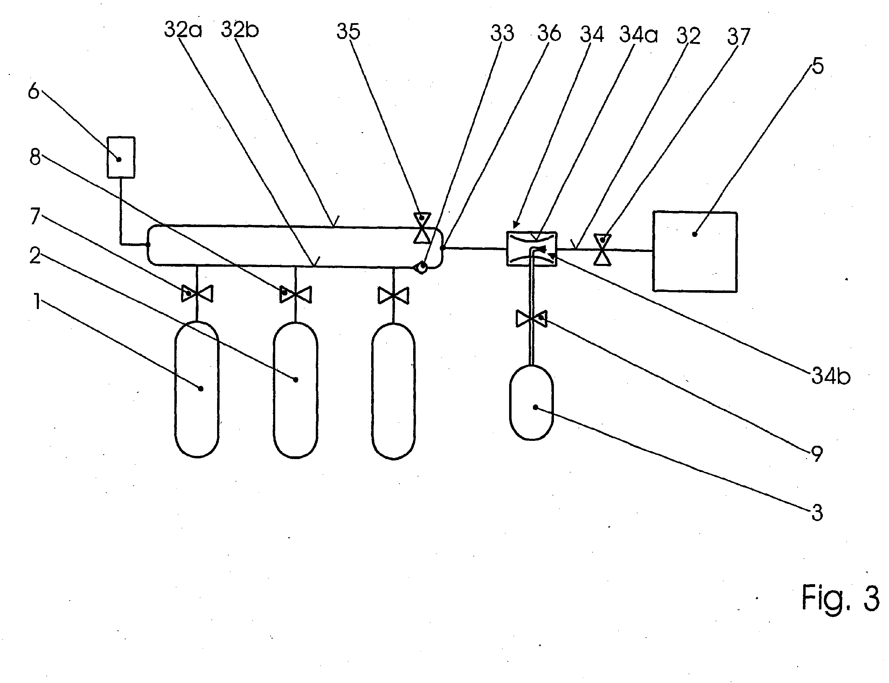

Im Rahmen der Erfindung sind verschiedene Ausführungsformen und Varianten möglich und, je nach dem einzelnen Anwendungsfall, vorteilhaft. In allen besteht die Saugstrahlpumpe aus einem Förderkanal und einer darin angeordneten Treibdüse. In einer ersten Ausführungsform bildet die Sammelleitung in der Saugstrahlpumpe den Förderkanal und der Reservebehälter ist mit der Treibdüse strömungsverbunden (Anspruch 3). Fig. 1,3

In Weiterbildung der ersten Ausführungsform ist die Sammelleitung in einem Punkt stromaufwärts der Saugstrahlpumpe in zwei eine Schleife bildende Äste verzweigt, wobei der erste Ast zwischen dem mindestens einen Druckgasbehälter und der Saugstrahlpumpe das Rückschlagventil, und der zweite Ast ein zweites Ventil hat (Anspruch 4).

In einer zweiten Ausführungsform hat die Sammelleitung zwei Äste, deren erster in der Saugstrahlpumpe den Förderkanal bildet und deren zweiter in der Treibdüse mündet, wobei der erste Ast zwischen dem mindestens einen Druckgasbehälter und der Saugstrahlpumpe ein Rückschlagventil und ein zweites Ventil hat, wobei die Druckgasbehälter zwischen dem Rückschlagventil und dem zweiten Ventil an die Sammelleitung angebunden sind (Anspruch 5). Ob die erste oder die zweite Ausführungsform vorzuziehen ist, hängt vom Druckbedarf des Verbrauchers und von der Auslegung der Saugstrahlpumpe ab.

In einer dritten Ausführungsform bildet eine Umgehungsleitung den Förderkanal der Saugstrahlpumpe und der Reservebehälter ist mit der Treibdüse strömungsverbunden, wobei die Umgehungsleitung in einem ersten Punkt der Sammelleitung in zwischen dem mindestens einen Behälter und dem Rückschlagventil abzweigt, sich in einem zweiten Punkt, der zwischen dem Rückschlagventil und dem Verbraucher liegt wieder mit der Sammelleitung vereinigt und zwischen dem ersten Punkt und der Saugstrahlpumpe ein weiteres Rückschlagventil angeordnet ist (Anspruch 6). In dieser Ausführungsform ist die Saugstrahlpumpe bei Normalbetrieb nicht durchströmt.

Vorzugsweise sind mehrere Behälter jeweils mit der Sammelleitung strömungsverbunden, wobei am Ausgang eines jeden Behälters ein als Taktventil ausgebildetes Regelventil vorhanden ist, welches in einer Reserve-Stellung ganz öffenbar ist (Anspruch 7). Damit kann der Druck in der Sammelleitung eingeregelt werden und in der Reservestellung ist bei ganz geöffnetem Ventil der Druckverlust geringer, sodass noch etwas mehr Restgas aus dem Druckgasbehälter gesogen werden kann.

In Weiterbildung der Erfindung ist die Sammelleitung über ein Betankungsventil mit einer externen Druckgasquelle verbindbar und enthält stromabwärts der Saugstrahlpumpe (und somit der Einmündung der Reserve) ein Absperrventil (Anspruch 8). Dadurch wird beim Betanken der Reservebehälter gleichzeitig mit dem mindestens einen Druckgasbehälter befüllt, ohne dass eine Rückwirkung auf den Verbraucher besteht.

Weiters liegt es im Rahmen der Erfindung, dass von der Sammelleitung eine Notablassleitung beziehungsweise eine Reparaturablassleitung abzweigt, die jeweils ein eigenes Absperrventil enthalten (Anspruch 9) und dass die Ventile in einem Ventilblock zusammengefasst sind, der auch zumindest teilweise die Sammelleitung und gegebenenfalls auch die Saugstrahlpumpe enthält (Anspruch 10).

Die Erfindung betrifft aber auch ein Verfahren zur Entnahme von gasförmigem Brennstoff aus mindestens einem Druckgasbehälter, der über eine Sammelleitung und Ventile mit dem Verbraucher strömungsverbunden ist. Die erfindungsgemäße Aufgabe wird dadurch gelöst, dass bei Absinken des Druckes in der Sammelleitung unter einen Schwellenwert gasförmiger Brennstoff einem Reservebehälter entnommen und über eine Saugstrahlpumpe der Sammelleitung zugeführt wird, wobei der mindestens eine Druckgasbehälter weistgehend entleert wird (Anspruch 11).

Im folgenden wird die Erfindung anhand von Abbildungen beschrieben und erläutert. Es stellen dar:
Fig. 1: Schema einer ersten Ausführungsform der Erfindung,
Fig. 2: Schema einer zweiten Ausführungsform der Erfindung,
Fig. 3: Schema einer dritten Ausführungsform der Erfindung,

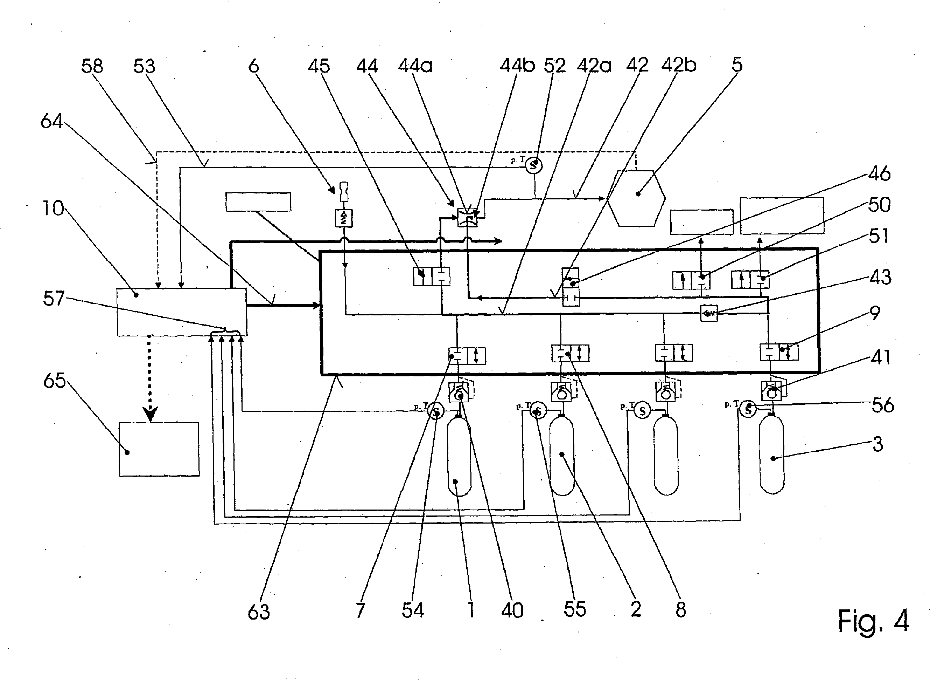

Fig. 4: eine vierte Ausführungsform der Erfindung.

In **Fig. 1** sind zwei Druckgasbehälter 1, 2 für die Versorgung eines Verbrauchers 5 im Normalbetrieb bestimmt. Es könnten aber auch mehr als zwei Druckgasbehälter oder nur ein einziger sein. Zusätzlich und erfindungsgemäß ist ein Reservebehälter 3 vorgesehen, dessen Volumen kleiner als das der Druckgasbehälter 1, 2 sein kann. Die Druckgasbehälter 1, 2 und der Reservebehälter 3 geben ihren Inhalt über Ventile 7, 8, 9, die vorzugsweise getaktet gesteuerte Ventile sind, an den Verbraucher 5 ab. Sie werden von einer Steuereinheit 10 aus angesteuert. Zum Befüllen des Systems, beispielsweise in einem Kraftfahrzeug an einer Tankstelle, ist ein Betankungsventil 6 vorgesehen. Zur leichteren Befüllung des Reservebehälters kann eine Umgehungsleitung mit Rückschlagventil 11 vorgesehen sein. Die genannten Komponenten sind in allen vier Ausführungsbeispielen mit denselben Bezugszeichen versehen. In der ersten Ausführungsform (Fig.1) geben die Druckgasbehälter 1, 2 ihren Inhalt in eine Sammelleitung 12 ab, die in Strömungsrichtung erst ein Rückschlagventil 13 und dann eine Saugstrahlpumpe 14 enthält. Die Saugstrahlpumpe 14 besteht im wesentlichen aus einem Förderkanal 14a und einer Treibdüse 14b. Die Sammelleitung 12 bildet in der Saugstrahlpumpe 14 den Förderkanal 14a und führt weiter über ein Abschließventil 15 zum Verbraucher 5. Im Normalbetrieb ist das Ventil 9 des Reservebehälters 3 geschlossen und das von den Druckgasbehältern 1, 2 abgegebene Druckgas strömt durch das Rückschlagventil 13, die Saugstrahlpumpe 14 und ein Abschließventil 15 zum Verbraucher 5.

Wenn die Druckgasbehälter 1,2 so weit entleert sind, dass ihr Druck zur Überwindung der Strömungswiderstände in der Sammelleitung 12 nicht mehr ausreicht, wird das Ventil 9 geöffnet und Druckgas aus dem Reservebehälter 3 strömt in die Treibdüse 14b der Saugstrahlpumpe 14. Dadurch wird in der Sammelleitung 12 stromaufwärts der Saugstrahlpumpe 14 ein Unterdruck erzeugt, der das Rückschlagventil 13 öffnet und den Druckgasbehältern 1, 2 noch eine dem erzeugten Unterdruck entsprechende Restmenge entnimmt.

Die Ausführungsform der **Fig.2** unterscheidet sich von den vorhergehenden dadurch, dass die Sammelleitung 22 eine Umgehungsleitung 21 aufweist. Diese zweigt in einen ersten Punkt 26 zwischen den Druckgasbehältern 1, 2 und dem Rückschlagventil 23 von der Sammelleitung 22 ab und mündet in einem zweiten Punkt 27 wieder in der Sammelleitung 22. Die Umgehungsleitung 21 enthält in Strömungsrichtung zuerst ein weiteres Rückschlagventil 25 und die Saugstrahlpumpe 24. Die Umgehungsleitung 21 bildet in der Saugstrahlpumpe 24 wieder deren Förderkanal 24a. Im Normalbetrieb ist das Rückschlagventil 23 geöffnet, im Reservebetrieb ist das weitere Rückschlagventil 25 geöffnet und das Rückschlagventil 23 geschlossen.

In der Ausführungsform der **Fig. 3** ist die Sammelleitung 32 stromaufwärts der Saugstrahlpumpe 34 in einen ersten Ast 32a und einen zweiten Ast 32b verzweigt, wobei die beiden Äste eine Schleife bilden, die auch mit dem Betankungsventil 6 in Verbindung steht. Der erste Ast 32a steht mit den Druckgasbehältern 1, 2 in Verbindung und führt über ein Rückschlagventil 33 zu einem Verzweigungspunkt 36. Der zweite Ast 32b führt von den Druckgasbehältern 1,2 über ein Umschaltventil 35 zum Verzweigungspunkt 36. Im Normalbetrieb strömt das Druckgas durch das Rückschlagventil 33 durch die nicht arbeitende Saugstrahlpumpe 34 hindurch, in der Sammelleitung 32 durch ein Abschließventil 28 hindurch zum Verbraucher 5. Im Reservebetrieb ist das Umschaltventil 35 geöffnet. In dieser Stellung saugt die Saugstrahlpumpe 34 durch den zweiten Ast 32b der Sammelleitung Gas aus den Druckgasbehältern 1, 2. Weil im ersten Zweig 32a ein kleinerer Druck herrscht, bleibt das Rückschlagventil 33 geschlossen.

Die Ausführungsform der **Fig .4** ist etwas genauer als nur schematisch dargestellt. Die Druckgasbehälter 1, 2 (und noch ein weiterer) sind mit sogenannten Überströmventilen 40, 41 versehen, welche bei zu hohem Druckabfall in der Leitung (etwa bei Bruch einer Leitung) als Sicherheitsmaßnahme schließen. Die Druckbehälter 1, 2 und der Reservebehälter 3 sind weiters über die gesteuert getakteten Ventile 7, 8, 9 an die Sammelleitung 42 angeschlossen. Diese besteht wieder aus einem ersten Ast 42a und einem zweiten Ast 42b. Der erste Ast 42a verbindet die Druckgasbehälter 1, 2 über ein zweites Ventil 45 mit der Saugstrahlpumpe 44, in deren Förderkanal 44a er mündet. Der zweite Ast 42b ist über ein Rückschlagventil 43 an den ersten Ast 42a an geschlossen und enthält von diesem ausgehend die Verbindung mit dem Reservebehälter 3, gegebenenfalls ein drittes Ventil 46 und führt zur Treibdüse 44b der Saugstrahlpumpe 44. Im Normalbetrieb ist das zweite Ventil 45 geschlossen und der erste Ast 42a der Sammelleitung ist über das geöffnete Rückschlagventil 43 mit dem zweiten Ast 42b in Verbindung. Von diesem gelangt das Druckgas durch die Saugstrahlpumpe 44 hindurch zum Verbraucher 5. Im Reservebetrieb ist das zweite Ventil 45 geöffnet, wegen des höheren Druckes im zweiten Ast 42b bleibt das Rückschlagventil 43 geschlossen, sodass der Inhalt des Reservebehälters 3 durch den zweiten Ast 42d in die Saugstrahlpumpe 44 strömt und so Gas aus dem ersten Ast 42a und somit aus den Druckgasbehältern 1, 2 ansaugt.

An den zweiten Ast 42b ist weiters ein Notablassventil 50 und ein Reparaturablassventil 51 angeschlossen, durch die das System zum entsprechenden Zweck entleerbar ist. An der Sammelleitung 42 ist stromabwärts der Saugstrahlpumpe 44 ein Sensor 52 angebracht, der den dort herrschenden Druck und die Temperatur misst und über eine Leitung 53 der Steuereinheit 10 meldet. Weiters sind an den Druckgasbehältern 1, 2 und am Reservebehälter 3 ebensolche Sensoren für Druck und Temperatur 54, 55, 56 angebracht, welche Messdaten über die zusammengefasst mit 57 bezeichneten Leitungen der Steuereinheit 10 zur Verfügung stellen. Mit 58 ist strichliert noch eine weitere Signalleitung 58 angedeutet, welche gegebenenfalls der Steuereinheit 10 weitere Betriebsdaten beziehungsweise Messgrößen vom Verbraucher 5 liefert.

Durch geeignete Ansteuerung der getakteten Ventile 7, 8 kann mittels der Steuereinheit 10, ausgehend von den dort zusammenlaufenden Daten, auch die Umschaltung der Entnahme bei Normalbetrieb von einem Behälter 1 auf den anderen Behälter 2, und die Umschaltung auf Reservebetrieb veranlasst werden.

Im gezeigten Ausführungsbeispiel sind mehrere Ventile (7,8,9,45,46,50, 51) zu einem Ventilblock 63 zusammengefasst, welcher auch die Äste 42a, 42b der Sammelleitung, das Rückschlagventil 43 und gegebenenfalls auch die Saugstrahlpumpe 44 enthält. Diesem Ventilblock 63 werden auf kurzem Wege die Ansteuersignale für die steuerbaren Ventile zugeführt, was durch nur einen Pfeil 64 angedeutet ist. Schließlich kann die Steuereinheit 10 noch mit einer Anzeige 65 verbunden sein, welche dem Maschinisten beziehungsweise Lenker des Kraftfahrzeuges Auskunft über den Füllstand der Druckgasbehälter und weitere Informationen gibt.

Im Rahmen der Erfindung sind weitere Ausführungsformen denkbar, auch Kombinationen der Merkmale der vier beschriebenen Ausführungsbeispiele. Der Verbraucher 5 wurde nicht beschrieben, da das erfindungsgemäße System für alle denkbaren Verbraucher, insbesondere Verbrennungskraftmaschinen, mit allen denkbaren Gemischbildungsverfahren, einsetzbar ist. Sie sind bei entsprechender Auslegung der Ventile und der Saugstrahlpumpe realisierbar.

## Patentansprüche

1. System zur Versorgung eines Verbrauchers mit gasförmigem Brennstoff, mit mindestens einem Druckgasbehälter der über eine Sammelleitung und Ventile mit dem Verbraucher strömungsverbunden ist, **dadurch gekennzeichnet, dass** ein Reservebehälter (3) über ein erstes Ventil (9) an die Sammelleitung (12;22;32;42) angeschlossen ist und dass eine mit Gas aus dem Reservebehälter (3) betriebene Saugstrahlpumpe (14;24;34;44) vorgesehen ist, welche Gas aus dem mindestens einen Druckgasbehälter (1,2, ..) in die Sammelleitung (12;22; 32;42) fördert, wozu die Saugstrahlpumpe (14;24;34;44) hinsichtlich der Strömung zwischen dem mindestens einen Druckgasbehälter (1,2, ..) und dem Verbraucher (5) angeordnet ist.

2. System nach Anspruch 1, **dadurch gekennzeichnet, dass** in der Sammelleitung (12;22;32;42) zwischen dem mindestens einem Druckgasbehälter (1,2, ..) und der Einmündung des vom Reservebehälter (3) kommenden Gases ein Rückschlagventil (13;23;33;43) angeordnet ist, das eine Strömung vom Reservebehälter (3) zu dem mindestens einem Druckgasbehälter (1,2, ..) unterbindet.

3. System nach Anspruch 2, wobei die Saugstrahlpumpe aus einem Förderkanal und einer darin angeordneten Treibdüse besteht, **dadurch gekennzeichnet, dass** die Sammelleitung (12;32) in der Saugstrahlpumpe (14;24) den Förderkanal (14a;24a) bildet und der Reservebehälter (3) mit der Treibdüse (14b;24b) strömungsverbunden ist.

4. System nach Anspruch 3, **dadurch gekennzeichnet, dass** die Sammelleitung (32) in einem Punkt (36) stromaufwärts der Saugstrahlpumpe (34) in zwei eine Schleife bildende Äste (32a, 32b) verzweigt ist, wobei der erste Ast (32a) zwischen dem mindestens einen Druckgasbehälter (1,2, ..) und der Saugstrahlpumpe, (34) das Rückschlagventil (33), und der zweite Ast (32b) ein zweites Ventil (35) enthält.

5. System nach Anspruch 3, **dadurch gekennzeichnet, dass** die Sammelleitung (42) zwei Äste (42a, 42b) hat, deren erster (42a) in der Saugstrahlpumpe (44) den Förderkanal (44a) bildet und dessen zweiter (42b) in der Treibdüse (44b) mündet, wobei der erste Ast (42a) zwischen dem mindestens einen Druckgasbehälter (1,2,..) und der Saugstrahlpumpe (44) das Rückschlagventil (43) und ein zweites Ventil (45) hat, wobei die Druckgasbehälter (1,2, ..) zwischen dem Rückschlagventil (43) und dem zweites Ventil (45) an die Sammelleitung (42) angebunden sind.

6. System nach Anspruch 2, **dadurch gekennzeichnet, dass** eine Umgehungsleitung (21) in der Saugstrahlpumpe (24) den Förderkanal (24a) bildet und der Reservebehälter (3) mit der Treibdüse (24b) strömungsverbunden ist, wobei die Umgehungsleitung (21) in einem ersten Punkt (26) der Sammelleitung (22) zwischen dem mindestens einen Behälter (1,2, ..) und dem Rückschlagventil (23) abzweigt, sich in einem zweiten Punkt (27), der zwischen dem Rückschlagventil (23) und dem Verbraucher (5) liegt, wieder mit der Sammelleitung (22) vereint und zwischen dem ersten Punkt (26) und der Saugstrahlpumpe (24) ein weiteres Rückschlagventil (25) angeordnet ist.

7. System nach Anspruch 1, **dadurch gekennzeichnet, dass** mehrere Behälter (1,2, ..) jeweils mit der Sammelleitung (12;22;32;42) strömungsverbunden sind, wobei am Ausgang eines jeden Behälters (1,2, .., 3) ein als Taktventil ausgebildetes Regelventil (7,8, .., 9) vorhanden ist, welches gegebenenfalls in einer Reserve-Stellung ganz öffenbar ist.

8. System nach Anspruch 1, **dadurch gekennzeichnet, dass** die Sammelleitung (12;22;32;42) über ein Betankungsventil (6) mit einer externen Druckgasquelle verbindbar ist und stromabwärts der Saugstrahlpumpe (14;24;34;44) ein Absperrventil (15;28;37) enthält.

9. System nach Anspruch 1, **dadurch gekennzeichnet, dass** von der Sammelleitung (12;22;32;42) eine Notablassleitung beziehungsweise eine Reparaturablassleitung abzweigt, die jeweils ein eigenes Absperrventil (50, 51) enthalten.

10. System nach Anspruch 1, **dadurch gekennzeichnet, dass** die Ventile (7,8, .., 9, 45, 50, 51) in einem Ventilblock (63) zusammengefasst sind, der auch zumindest teilweise die Sammelleitung (12;22;32;42) enthält.

11. Verfahren zur Entnahme von gasförmigem Brennstoff aus mindestens einem Druckgasbehälter, der über eine Sammelleitung und Ventile mit dem Verbraucher strömungsverbunden ist, **dadurch gekennzeichnet, dass** bei Absinken des Druckes in der Sammelleitung (12;22;32;42) unter einen Schwellenwert gasförmiger Brennstoff einem Reservebehälter (3) entnommen und über eine Saugstrahlpumpe (14;24;34;44) der Sammelleitung (12;22;32;42) zugeführt wird, wobei der mindestens eine Druclcgasbehälter (1,2, ..) weitgehend entleert wird.

## Claims

1. System for supplying a consumer with gaseous fuel, with at least one compressed gas container which is connected in terms of flow to the consumer via a collecting line and valves, **characterized in that** a reserve container (3) is connected to the collecting line (12; 22; 32; 42) via a first valve (9), and **in that** an ejector pump (14; 24; 34; 44) is provided, the ejector pump being operated with gas from the reserve container (3) and feeding gas from the at least one compressed gas container (1, 2, ..) into the collecting line (12; 22; 32; 42), for which purpose the ejector pump (14; 24; 34; 44) is arranged, with regard to the flow, between the at least one compressed gas container (1, 2, ..) and the consumer (5).

2. System according to Claim 1, **characterized in that** a nonreturn valve (13; 23; 33; 43) is arranged in the collecting line (12; 22; 32; 42) between the at least one compressed gas container (1, 2, ..) and the location where the gas coming from the reserve container (3) opens out, said nonreturn valve preventing flow from the reserve container (3) to the at least one compressed gas container (1, 2, ..).

3. System according to Claim 2, wherein the ejector pump comprises a feed duct and a driving nozzle arranged therein, **characterized in that** the collecting line (12; 32) in the ejector pump (14; 24) forms the feed duct (14a; 24a), and the reserve container (3) is connected in terms of flow to the driving nozzle (14b; 24b).

4. System according to Claim 3, **characterized in that** the collecting line (32) is branched at a point (36) upstream of the ejector pump (34) into two branches (32a, 32b) forming a loop, the first branch (32a) between the at least one compressed gas container (1, 2, ..) and the ejector pump (34) containing the nonreturn valve (33), and the second branch (32b) containing a second valve (35).

5. System according to Claim 3, **characterized in that** the collecting line (42) has two branches (42a, 42b), the first (42a) of which forms the feed duct (44a) in the ejector pump (44) and the second (42b) of which opens into the driving nozzle (44b), the first branch (42a) between the at least one compressed gas container (1, 2, ..) and the ejector pump (44) having the nonreturn valve (43) and a second valve (45), and the compressed gas containers (1, 2, ..) being connected between the nonreturn valve (43) and the second valve (45) to the collecting line (42).

6. System according to Claim 2, **characterized in that** a bypass line (21) in the ejector pump (24) forms the feed duct (24a), and the reserve container (3) is connected in terms of flow to the driving nozzle (24b), the bypass line (21) branching off at a first point (26) of the collecting line (22) between the at least one container (1, 2, ..) and the nonreturn valve (23) and being reunited with the collecting line (22) at a second point (27) located between the nonreturn valve (23) and the consumer (5), and a further nonreturn valve (25) being arranged between the first point (26) and the ejector pump (24).

7. System according to Claim 1, **characterized in that** a plurality of containers (1, 2, ..) are each connected in terms of flow to the collecting line (12; 22; 32; 42), with a control valve (7, 8, .., 9) which is designed as a cyclically operated valve and which, if appropriate, can be completely opened in a reserve position being present at the output of each container (1, 2, .., 3).

8. System according to Claim 1, **characterized in that** the collecting line (12; 22; 32; 42) can be connected to an external compressed gas source via a refueling valve (6) and contains a shut-off valve (15; 28; 37) downstream of the ejector pump (14; 24; 34; 44).

9. System according to Claim 1, **characterized in that** an emergency discharge line or a repair discharge line, which each contain their own shut-off valve (50, 51), branches off from the collecting line (12; 22; 32; 42).

10. System according to Claim 1, **characterized in that** the valves (7, 8, .., 9, 45, 50, 51) are combined in a valve block (63) which also contains at least part of the collecting line (12; 22; 32; 42).

11. Method for removing gaseous fuel from at least one compressed gas container which is connected in terms of flow to the consumer via a collecting line and valves, **characterized in that**, when the pressure in the collecting line (12; 22; 32; 42) drops below a threshold value, gaseous fuel is removed from a reserve container (3) and supplied to the collecting line (12; 22; 32; 42) via an ejector pump (14; 24; 34; 44), with the at least one compressed gas container (1, 2, ..) being largely emptied.

## Revendications

1. Système d'alimentation d'un consommateur en carburant gazeux, comprenant au moins un récipient de gaz sous pression qui est connecté fluidiquement par le biais d'une conduite collectrice et de soupapes au consommateur, **caractérisé en ce qu'**un réservoir (3) est raccordé par le biais d'une première soupape (9) à la conduite collectrice (12 ; 22 ; 32 ; 42) et **en ce qu'**une pompe à jet aspirante (14 ; 24 ; 34 ; 44) entraînée avec du gaz provenant du réservoir (3) est prévue, laquelle refoule du gaz hors de l'au moins un récipient de gaz sous pression (1, 2, ..) dans la conduite collectrice (12 ; 22 ; 32 ; 42), la pompe à jet aspirante (14 ; 24 ; 34; 44) étant à cet effet disposée en termes d'écoulement entre l'au moins un récipient de gaz sous pression (1, 2,..) et le consommateur (5).

2. Système selon la revendication 1, **caractérisé en ce qu'**un clapet anti-retour (13 ; 23 ; 33 ; 43) est disposé dans la conduite collectrice (12 ; 22 ; 32 ; 42) entre l'au moins un récipient de gaz sous pression (1, 2,..) et l'embouchure du gaz provenant du réservoir (3), lequel le clapet anti-retour supprime un écoulement provenant du réservoir (3) vers l'au moins un récipient de gaz sous pression (1, 2,..).

3. Système selon la revendication 2, dans lequel la pompe à jet aspirante se compose d'un canal de refoulement et d'une buse d'entraînement disposée dans celui-ci, **caractérisé en ce que** la conduite collectrice (12 ; 32) dans la pompe à jet aspirante (14 ; 24) forme le canal de refoulement (14a ; 24a) et le réservoir (3) est connecté fluidiquement à la buse d'entraînement (14b ; 24b).

4. Système selon la revendication 3, **caractérisé en ce que** la conduite collectrice (32) se divise au niveau d'un point (36) en amont de la pompe à jet aspirante (34) dans deux branches (32a, 32b) formant une boucle, la première branche (32a) entre l'au moins un récipient de gaz sous pression (1, 2,..) et la pompe à jet aspirante (34) contenant le clapet anti-retour (33), et la deuxième branche (32b) contenant une deuxième soupape (35).

5. Système selon la revendication 3, **caractérisé en ce que** la conduite collectrice (42) présente deux branches (42a, 42b), dont la première (42a) dans la pompe à jet aspirante (44) forme le canal de refoulement (44a) et dont la deuxième (42b) débouche dans la buse d'entraînement (44b), la première branche (42a) entre l'au moins un récipient de gaz sous pression (1, 2,..) et la pompe à jet aspirante (44) présentant le clapet anti-retour (43) et une deuxième soupape (45), le récipient de gaz sous pression (1, 2,..) entre le clapet anti-retour (43) et la deuxième soupape (45) étant raccordé à la conduite collectrice (42).

6. Système selon la revendication 2, **caractérisé en ce qu'**une conduite de contournement (21) dans la pompe à jet aspirante (24) forme le canal de refoulement (24a) et le réservoir (3) est connecté fluidiquement à la buse d'entraînement (24b), la conduite de contournement (21) se divisant au niveau d'un premier point (26) de la conduite collectrice (22) entre l'au moins un récipient (1, 2,..) et le clapet anti-retour (23), se réunissant à nouveau en un deuxième point (27), situé entre le clapet anti-retour (23) et le consommateur (5), avec la conduite collectrice (22) et un clapet anti-retour supplémentaire (25) étant disposé entre le premier point (26) et la pompe à jet aspirante (24).

7. Système selon la revendication 1, **caractérisé en ce que** plusieurs récipients (1, 2,..) sont connectés fluidiquement à chaque fois à la conduite collectrice (12 ; 22 ; 32 ; 42), une soupape de régulation (7, 8,.., 9) réalisée sous forme de soupape de temporisation étant prévue à la sortie de chaque récipient (1, 2,.., 3), laquelle peut être complètement ouverte éventuellement dans une position de réserve.

8. Système selon la revendication 1, **caractérisé en ce que** la conduite collectrice (12 ; 22 ; 32 ; 42) peut être connectée à une source de gaz sous pression externe par le biais d'une soupape de remplissage (6) et contient en aval de la pompe à jet aspirante (14 ; 24 ; 34 ; 44) une soupape d'arrêt (15 ; 28 ; 37).

9. Système selon la revendication 1, **caractérisé en ce qu'**une conduite d'échappement de secours ou une conduite d'échappement de réparation part de la conduite collectrice (12 ; 22 ; 32 ; 42) et comprend à chaque fois une soupape d'arrêt propre (50, 51).

10. Système selon la revendication 1, **caractérisé en ce que** les soupapes (7, 8,.., 9, 45, 50, 51) sont réunies dans un bloc soupape (63) qui contient également au moins en partie la conduite collectrice (12 ; 22 ; 32 ; 42).

11. Procédé destiné à prélever du combustible gazeux d'au moins un récipient de gaz sous pression qui est connecté fluidiquement par le biais d'une conduite collectrice et de soupapes au consommateur, **caractérisé en ce que** dans le cas d'une réduction de la pression dans la conduite collectrice (12 ; 22 ; 32 ; 42) en dessous d'une valeur seuil, du combustible gazeux est prélevé d'un réservoir (3) et est acheminé par le biais d'une pompe à jet aspirante (14 ; 24 ; 34 ; 44) à la conduite collectrice (12 ; 22 ; 32 ; 42), l'au moins un récipient de gaz sous pression (1, 2,..) étant essentiellement vidé.
